# EUROPEAN PATENT APPLICATION

(11) **EP 4 564 986 A1**
(43) Date of publication of application: **04.06.2025**
(21) Application number: 23845373.2
(22) Date of filing: 18.07.2023
(51) Int. Cl.: H04W 76/11

(54) **PIN DEVICE REGISTRATION METHOD AND APPARATUS, AND COMMUNICATION DEVICE**

(30) Priority: 25.07.2022 CN 202210884608
(71) Applicant: Vivo Mobile Communication Co., Ltd., Dongguan, Guangdong 523863 (CN)
(72) Inventor: ZHANG, Yizhong, Dongguan, Guangdong 523863 (CN); XIE, Zhenhua, Dongguan, Guangdong 523863 (CN)
(74) Representative: Lavoix
(86) International application number: PCT/CN2023/107889
(87) International publication number: WO 2024/022161

(57) **Abstract**

This application discloses a method and an apparatus for registering a PIN device and a communication device, pertains to the field of wireless communication technologies. The method for registering a PIN device in the embodiments of this application includes: sending, by a first communication device, device information of the first communication device to a second communication device; and receiving, by the first communication device, first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

## Description

### CROSS-REFERENCE TO RELATED APPLICATIONS

This application claims priority to Chinese Patent Application No. 202210884608.X filed in China on July 25, 2022, which is incorporated herein by reference in its entirety.

### TECHNICAL FIELD

This application pertains to the field of wireless communication technologies, specifically, relates to a method and an apparatus for registering a PIN device, and a communication device.

### BACKGROUND

A personal IoT network (Personal IoT Network, PIN) is a network composed of a large number of internet of things devices. These internet of things devices can either be wearable devices (that is, devices worn by people, such as cameras, headsets, watches, and health monitors) or internet of things devices (that is, smart lights, cameras, thermostats, door sensors, voice assistants, speakers, refrigerators, and washing machines) at home. Typically, PINs are used in scenarios such as homes and offices. internet of things devices deployed in these scenarios can interconnect and communicate with each other, and obtain services, hence the name personal IoT network. Additionally, internet of things devices in a PIN can access a 5th generation mobile communication technology (5th Generation Mobile Communication Technology, 5G) network and other network servers in the network through a mechanism or an implementation via a device with gateway function within the PIN.

However, there is no clear consensus in the related art on how communication devices should register with a PIN.

### SUMMARY

Embodiments of this application provide a method and an apparatus for registering a PIN device, and a communication device, which can solve the problem of how communication devices are registered in a PIN.

According to a first aspect, a method for registering a PIN device is provided and includes:
sending, by a first communication device, device information of the first communication device to a second communication device; and
receiving, by the first communication device, first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

According to a second aspect, a method for registering a PIN device is provided and includes:
obtaining, by a second communication device, device information of a first communication device;
sending, by the second communication device, a fourth request message to a third communication device, where the fourth request message includes the device information of the first communication device;
receiving, by the second communication device, a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and
sending, by the second communication device, the first information to the first communication device.

According to a third aspect, a method for registering a PIN device is provided and includes:
receiving, by a third communication device, a fourth request message sent by a second communication device, where the fourth request message includes device information of a first communication device; and
sending, by the third communication device, a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device.

According to a fourth aspect, an apparatus for registering a PIN device is provided and includes:
a first sending module configured to send device information of a first communication device to a second communication device; and
a first receiving module configured to receive first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

According to a fifth aspect, an apparatus for registering a PIN device is provided and includes:
an obtaining module configured to obtain device information of a first communication device;
a first sending module configured to send a fourth request message to a third communication device, where the fourth request message includes the device information of the first communication device;
a first receiving module configured to receive a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and
a second sending module configured to send the first information to the first communication device.

According to a sixth aspect, an apparatus for registering a PIN device is provided and includes:
a first receiving module configured to receive a fourth request message sent by a second communication device, where the fourth request message includes device information of a first communication device; and
a first sending module configured to send a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with a third communication device; identifier information of the PIN; and address information of the third communication device.

According to a seventh aspect, a communication device is provided. The terminal includes a processor and a memory. The memory stores a program or an instruction capable of running on the processor. When the program or instruction is executed by the processor, the steps of the method for registering a PIN device according to the first aspect, the second aspect, or the third aspect are implemented.

According to an eighth aspect, a communication device is provided and includes a processor and a communication interface. The communication interface is configured to send device information of a first communication device to a second communication device; and receive first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

According to a ninth aspect, a communication device is provided and includes a processor and a communication interface. The communication interface is configured to obtain device information of a first communication device; send a fourth request message to a third communication device, where the fourth request message includes: the device information of the first communication device; receive a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and send the first information to the first communication device.

According to a tenth aspect, a communication device is provided and includes a processor and a communication interface. The communication interface is configured to receive a fourth request message sent by a second communication device, where the fourth request message includes: device information of a first communication device; send a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with a third communication device; identifier information of the PIN; and address information of the third communication device.

According to an eleventh aspect, a communication system is provided and includes a first communication device, a second communication device, and a third communication device, where the first communication device can be configured to execute the steps of the method for registering a PIN device according to the first aspect, the second communication device can be configured to execute the steps of the method for registering a PIN device according to the second aspect, and the third communication device can be configured to execute the steps of the method for registering a PIN device according to the second aspect.

According to a twelfth aspect, a readable storage medium is provided. The readable storage medium stores a program or an instruction, and when the program or instruction is executed by a processor, the steps of the method for registering a PIN device according to the first aspect, the second aspect, or the third aspect are implemented.

According to a thirteenth aspect, a chip is provided. The chip includes a processor and a communication interface. The communication interface is coupled to the processor, and the processor is configured to run a program or an instruction to implement the steps of the method for registering a PIN device according to the first aspect, the second aspect, or the third aspect.

According to a fourteenth aspect, a computer program/program product is provided. The computer program/program product is stored in a storage medium, and the computer program/program product is executed by at least one processor to implement the steps of the method for registering a PIN device according to the first aspect, the second aspect, or the third aspect.

In the embodiments of this application, the specific process for registering the first communication device to the PIN is provided: that is, sending the device information of the first communication device to the second communication device, so that the second communication device acts as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device, thereby enabling efficient and accurate registration of the first communication device with the PIN.

### BRIEF DESCRIPTION OF DRAWINGS

FIG. 1 is a first schematic flowchart of a method for registering a PIN device in an embodiment of this application;
FIG. 2 is a second schematic flowchart of a method for registering a PIN device in an embodiment of this application;
FIG. 3 is a third schematic flowchart of a method for registering a PIN device in an embodiment of this application;
FIG. 4 is a schematic flowchart of a method for registering a PIN device in Embodiment 1 of this application;
FIG. 5 is a first schematic structural diagram of an apparatus for registering a PIN device in an embodiment of this application;
FIG. 6 is a second schematic structural diagram of an apparatus for registering a PIN device in an embodiment of this application;
FIG. 7 is a third schematic structural diagram of an apparatus for registering a PIN device in an embodiment of this application;
FIG. 8 is a first schematic structural diagram of a communication device in an embodiment of this application;
FIG. 9 is a schematic diagram of a hardware structure of a terminal in an embodiment of this application; and
FIG. 10 is a second schematic structural diagram of a communication device in an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. However, these technologies may also be applied to other applications than an NR system application, for example, the 6^{th} generation (6^{th} Generation, 6G) communication system.

A PIN includes several important communication devices:
(1) PIN device (PIN Element, PINE): terminals or devices within the PIN which form the basic elements of the PIN. PINEs can be UEs or devices or non-3rd generation partnership project (3rd Generation Partnership Project, 3GPP) devices inside the PIN (communicating with a 5G core network (5G Core, 5GC) directly through the PIN, through a PEGC, or through a PEGC) or outside the PIN communicating with 5GC through a PEGC.
(2) PIN device with management capability (PIN Elements with Management Capability, PEMC): PEMCs manage the entire PIN.
(3) PIN device with gateway capability (PIN Elements with Gateway Capability, PEGC): PEGCs can provide PINEs with connectivity to a 5G network or serve as relays for communication between PINEs. For example, if one PINE needs to communicate with another PINE within the PIN, a PEGC can perform routing.
(4) PIN server (PIN server): responsible for authorizing establishment of a PIN. Typically, a PEMC triggers a PIN establishment request, and the PIN server then verifies the PIN establishment request. Additionally, the PIN server can further be used by a PINE to request to find a PIN, find a PEMC corresponding to a PIN, or the like.
(5) PIN management function (PIN Management Function, PINMF): responsible for PIN-related signaling processing, PIN-related ID allocation, and the like. It can be a PIN server outside a 5GC, a network function (Network Function, NF) or trusted application function (Application Function, AF) inside a 5GC, or a third-party application server.

A method and an apparatus for registering a PIN device, and a communication device that are provided in the embodiments of this application are hereinafter described in detail through some embodiments and application scenarios thereof with reference to the accompanying drawings.

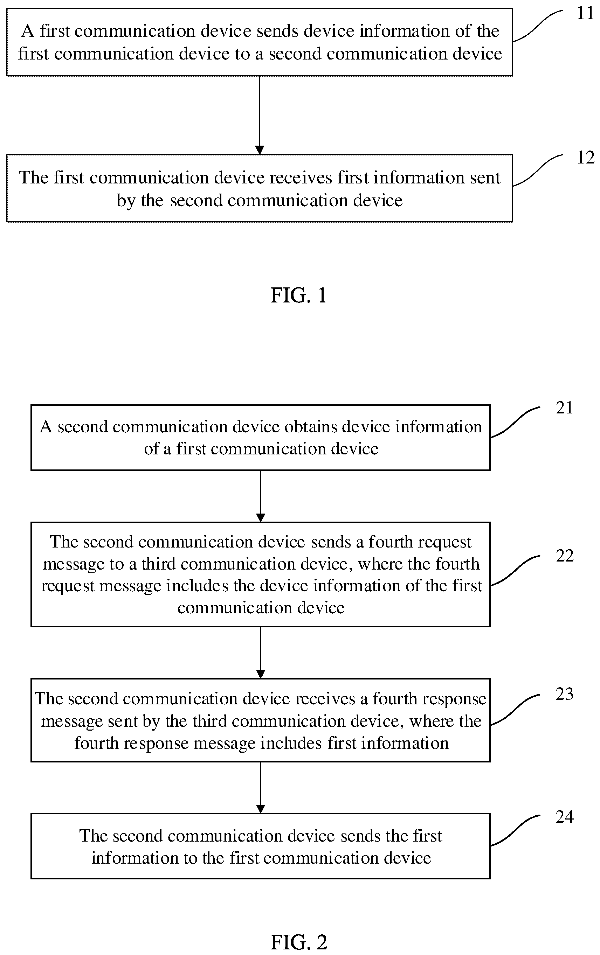

Referring to FIG. 1, an embodiment of this application provides a method for registering a PIN device including:
Step 11. A first communication device sends device information of the first communication device to a second communication device.

In this embodiment of this application, optionally, the first communication device can be a communication device that needs to be registered as a PINE. The first communication device can alternatively be a communication device that needs to be registered as a PEGC.

In this embodiment of this application, optionally, the second communication device can be a PEMC, that is, a device with management capability in a PIN.

Step 12: The first communication device receives first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

In this embodiment of this application, optionally, the third communication device can be a PINMF, that is, a PIN management function. The PINMF can be a PIN server outside a 5GC, an NF inside a 5GC, a trusted AF, or a third-party application server. The third communication device can also be a core network device such as a unified data management (Unified Data Management, UDM) entity or a policy control function (Policy Control Function, PCF).

In this embodiment of this application, optionally, the first identifier is allocated by the third communication device and used to identify at least one of the following: a communication device with gateway capability (PEGC) in the PIN; and a communication device (PINE) in the PIN.

In this embodiment of this application, the process of registering the first communication device to the PIN is clarified, that is, sending the device information of the first communication device to the second communication device, so that the second communication device acts as an agent to register the first communication device with the PIN. This can reduce the implementation complexity of the first communication device. For example, in a case that the first communication device has no 3GPP communication capability, the first communication device cannot register with the network side by itself, and can be registered through agent-based registration by the second communication device. Additionally, the first communication device may not be clear about which PIN it needs to register with. The agent-based registration by the second communication device makes the affiliation of the first communication device clearer, that is, if a second communication device performs agent-based registration, the first communication device belongs to a PIN created by that second communication device.

In this embodiment of this application, optionally, the device information includes at least one of the following:
(1) Address information, where the address information includes at least one of the following: media access control (Media Access Control, MAC) address, internet protocol (Internet Protocol, IP) address, port number, fully qualified domain name (Fully Qualified Domain Name, FQDN), and uniform resource locator (Universal Resource Locator, URL).
(2) Device vendor information, where for example, the device vendor information includes device vendor name and/or device vendor identifier.
(3) Device description.
(4) Connection information, where the connection information includes at least one of the following: service set identifier (Service Set Identifier, SSID), Bluetooth identifier (Blue Tooth Identifier, BT ID), and password; and the password includes at least one of the following: WiFi password or Bluetooth password.
   In this embodiment of this application, before establishing a direct connection with the second communication device, the first communication device can broadcast its connection information to establish a direct connection with the second communication device. That is, if the first communication device is a broadcaster, the device information includes the connection information.
(5) Service feature information, where the service feature information is used to determine related information of a data network name (Data Network Name, DNN) or single network slice selection assistance information (Single Network Slice Selection Assistance Information, S-NSSAI). Optionally, the service feature information is used to determine the related information of DNN or S-NSSAI on the PEGC relay path.
(6) Second identifier for identifying the first communication device. For example, the second identifier of the first communication device can be an identifier of the first communication device in a 5G network. The second identifier can be a generic public subscription identifier (Generic Public Subscription Identifier, GPSI), a subscription permanent identifier (Subscription Permanent Identifier, SUPI), or the like.

In some embodiments of this application, optionally, the sending, by the first communication device, the device information of the first communication device to the second communication device includes:
Step 11A. The first communication device receives a first request message sent by the second communication device, where the first request message is used to request the device information of the first communication device.
Step 11B. The first communication device sends a first response message to the second communication device, where the first response message includes the device information of the first communication device; and the first response message is a response to the first request message.

The first response message is a response to the first request message.

In this embodiment of this application, the first request message can be a device information query (Device information Query) message, or a message of another type.

That is, the second communication device actively requests the device information of the first communication device to act as an agent to register the first communication device with the PIN.

In some embodiments of this application, optionally, the sending, by the first communication device, the device information of the first communication device to the second communication device includes:
Step 11a. The first communication device sends a second request message to the second communication device, where the second request message includes the device information of the first communication device. The second request message is further used to indicate the second communication device to act as an agent to register the first communication device with the PIN.

That is, the first communication device actively reports its device information and indicates the second communication device to act as an agent for its registration with the PIN.

Optionally, the method further includes:
Step 11b. The first communication device receives a second response message sent by the second communication device, where the second response message is a response to the second request message.

In some embodiments, optionally, the first information can alternatively be carried in the second response message.

In this embodiment of this application, optionally, the first communication device sends the device information of the first communication device to the second communication device through a direct connection to the second communication device.

Therefore, before the first communication device sends the device information of the first communication device to the second communication device through the direct connection to the second communication device, the method further includes: establishing, by the first communication device, the direct connection with the second communication device. For example, the direct connection can be a PC5 (communication interface between terminals) direct connection, a sidelink (Sidelink) direct connection, a WiFi connection, a wireless local area network (Wireless Local Area Network, WLAN) connection, a Bluetooth connection, or the like.

In this embodiment of this application, optionally, if the first information includes the first identifier in the PIN allocated to the first communication device by the third communication device, it indicates that the first communication device has been successfully registered with the PIN. In this case, the first communication device can be registered as a PINE, or as a PEGC.

In this embodiment of this application, optionally, if the first information includes the first indication information and/or the second indication information, it indicates that the first communication device has not been successfully registered with the PIN, and that the third communication device allows the first communication device to register as a PEGC in the PIN. In this case, optionally, the method further includes: sending, by the first communication device, a third request message to the third communication device based on the first information, where the third request message is used to request at least one of the following: registering the first communication device with the PIN; and registering the first communication device with the third communication device. Registering the first communication device with the PIN and registering the first communication device with the third communication device are different descriptions of the same meaning.

Then, registration of the first communication device is completed.

In this embodiment of this application, optionally, the first indication information and the second indication information can be two pieces of indication information, or one piece of indication information that indicates an association with the first communication device and indicates the first communication device to register with the third communication device.

In this embodiment of this application, optionally, the first indication information or second indication information is uniform resource identifier (Uniform Resource Identifier, URI) information. If the first indication information and second indication information are one piece of indication information, the indication information is URI information. The URI information is generated by the third communication device and used to provide registration authorization information (token) for the registration of the first communication device.

In this embodiment of this application, optionally, the first indication information or second indication information can alternatively be indicated by a bit. For example, the first indication information being bit 1 indicates an association with the first communication device. For another example, the second indication information being bit 1 means that the second communication device has indicated that the first communication device needs to register with the third communication device. The second indication information being bit 0 means that the second communication device has indicated that the first communication device does not need to register with the third communication device.

Referring to FIG. 2, an embodiment of this application further provides a method for registering a PIN device including.

Step 21. A second communication device obtains device information of a first communication device.

In this embodiment of this application, optionally, the first communication device can be a communication device that needs to be registered as a PINE. The first communication device can alternatively be a communication device that needs to be registered as a PEGC.

In this embodiment of this application, optionally, the second communication device can be a PEMC, that is, a device with management capability in a PIN.

Step 22: The second communication device sends a fourth request message to a third communication device, where the fourth request message includes the device information of the first communication device.

In this embodiment of this application, optionally, the fourth request message is used to request at least one of the following: registering the first communication device with the PIN; and registering the first communication device with the third communication device.

In this embodiment of this application, optionally, the third communication device can be a PINMF, that is, a PIN management function. The PINMF can be a PIN server outside a 5GC, an NF inside a 5GC, a trusted AF, or a third-party application server. The third communication device can alternatively be a core network device such as a UDM or a PCF.

Step 23: The second communication device receives a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device.

The fourth response message is a response to the fourth request message.

In this embodiment of this application, optionally, the first identifier is allocated by the third communication device and used to identify at least one of the following: a communication device with gateway capability (PEGC) in the PIN; and a communication device (PINE) in the PIN.

Step 24. The second communication device sends the first information to the first communication device.

In this embodiment of this application, it has specified the process of the second communication device acting as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device.

In this embodiment of this application, optionally, the device information includes at least one of the following:
(1) address information, where the address information includes at least one of the following: MAC address, IP address, port number, fully qualified domain name (FQDN), and uniform resource locator (URL);
(2) device vendor information; where for example, the device vendor information includes a device vendor name and/or a device vendor identifier (such as vendor name);
(3) device description (device description);
(4) connection information, where the connection information includes at least one of the following: service set identifier (SSID), Bluetooth identifier (BT ID), and password; and the password includes at least one of the following: WiFi password, and Bluetooth password;
(5) service feature information, where the service feature information is used to determine related information of a DNN or S-NSSAI; and optionally, the service feature information is used to determine related information of a DNN or S-NSSAI on a PEGC relay path; and
(6) second identifier for identifying the first communication device. For example, the second identifier of the first communication device can be an identifier of the first communication device in a 5G network, and for another example, can be a PINE address in a personal IoT network PIN.

In this embodiment of this application, optionally, the fourth request message further includes a third identifier of the second communication device in the PIN.

Optionally, the third identifier of the second communication device in the PIN is allocated by the third communication device, and used to identify the second communication device as a communication device with management capability (PEMC) in the PIN.

In some embodiments of this application, optionally, that a second communication device obtains device information of a first communication device includes:
Step 21A. The second communication device sends a first request message to the first communication device, where the first request message is used to request the device information of the first communication device.
Step 21B. The second communication device receives a first response message sent by the first communication device, where the first response message includes the device information of the first communication device.

The first response message is a response to the first request message.

That is, the second communication device actively requests the device information of the first communication device to act as an agent to register the first communication device with the PIN.

In some embodiments of this application, optionally, that a second communication device obtains device information of a first communication device includes:
Step 21a: The second communication device receives a second request message sent by the first communication device, where the second request message includes the device information of the first communication device.

That is, the first communication device actively reports its device information, and indicates the second communication device to act as an agent for its registration with the PIN.

Optionally, the method further includes:
Step 21b. The second communication device sends a second response message to the first communication device, where the second response message is a response to the second request message.

In this embodiment of this application, optionally, the second communication device obtains the device information of the first communication device through a direct connection to the first communication device.

Therefore, before the second communication device obtains the device information of the first communication device through a direct connection to the first communication device, the method further includes that the second communication device establishes the direct connection with the first communication device. For example, the direct connection can be a PC5 (communication interface between terminals) direct connection, a sidelink (Sidelink) direct connection, a WiFi connection, a wireless local area network (Wireless Local Area Network, WLAN) connection, a Bluetooth connection, or the like. In an embodiment, the second communication device can implement the initial discovery of the first communication device based on manual input by a user or a third-party application. In an embodiment, the second communication device can obtain the address information of the first communication device based on manual input by a user or a third-party application. In an embodiment, a PEMC function of the second communication device is part of a third-party application.

In this embodiment of this application, optionally, if the first information includes the first identifier in the PIN allocated to the first communication device by the third communication device, it indicates that the first communication device has been successfully registered with the PIN. In this case, the first communication device can be registered as a PINE, or as a PEGC.

In this embodiment of this application, optionally, if the first information includes the first indication information and/or the second indication information, it indicates that the first communication device has not been successfully registered with the PIN, and that the third communication device allows the first communication device to register as a PEGC in the PIN.

In this embodiment of this application, optionally, the first indication information and the second indication information can be two pieces of indication information, or one piece of indication information that indicates an association with the first communication device and indicates the first communication device to register with the third communication device.

In this embodiment of this application, optionally, the first indication information or second indication information is URI information. If the first indication information and second indication information are one piece of indication information, the indication information is URI information. The URI information is generated by the third communication device and used to provide registration authorization information (token) for the registration of the first communication device.

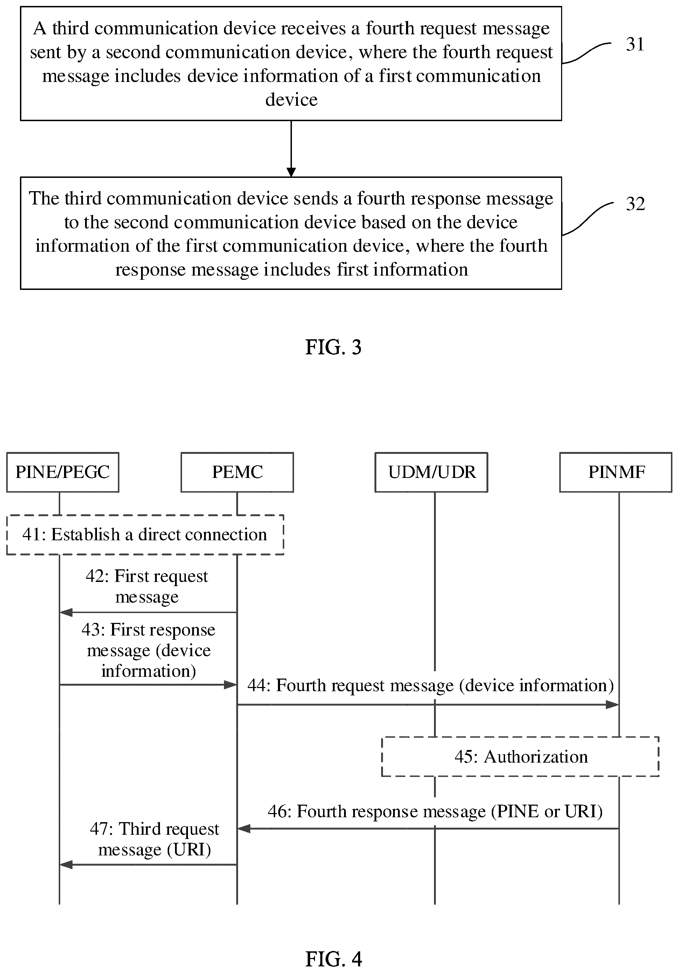

Referring to FIG. 3, an embodiment of this application further provides a method for registering a PIN device including:
Step 31: A third communication device receives a fourth request message sent by a second communication device, where the fourth request message includes device information of a first communication device.

In this embodiment of this application, optionally, the first communication device can be a communication device that needs to be registered as a PINE. The first communication device can alternatively be a communication device that needs to be registered as a PEGC.

In this embodiment of this application, optionally, the second communication device can be a PEMC, that is, a device with management capability in a PIN.

In this embodiment of this application, optionally, the third communication device can be a PINMF, that is, a PIN management function. The PINMF can be a PIN server outside a 5GC, an NF inside a 5GC, a trusted AF, or a third-party application server. The third communication device can alternatively be a core network device such as a UDM or a PCF.

Step 32: The third communication device sends a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device.

The fourth response message is a response to the fourth request message.

In this embodiment of this application, optionally, the first identifier is allocated by the third communication device and used to identify at least one of the following: a communication device with gateway capability (PEGC) in the PIN; and a communication device (PINE) in the PIN.

In this embodiment of this application, the process of registering the first communication device to the PIN is clarified, that is, sending the device information of the first communication device to the second communication device, so that the second communication device acts as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device.

In this embodiment of this application, optionally, the device information includes at least one of the following:
(1) address information, where the address information includes at least one of the following: MAC address, IP address, port number, fully qualified domain name (FQDN), and uniform resource locator (URL);
(2) device vendor information;
(3) device description;
(4) connection information, where the connection information includes at least one of the following: service set identifier (SSID), Bluetooth identifier (BT ID), and password; and the password includes at least one of the following: WiFi password, and Bluetooth password;
(5) service feature information, where the service feature information is used to determine related information of a DNN or S-NSSAI; and optionally, the service feature information is used to determine related information of a DNN or S-NSSAI on a PEGC relay path; and
(6) second identifier for identifying the first communication device. For example, the second identifier of the first communication device can be an identifier of the first communication device in a 5G network.

In some embodiments of this application, optionally, the fourth request message further includes a third identifier of the second communication device in the PIN.

In some embodiments of this application, optionally, the third identifier of the second communication device in the PIN is allocated by the third communication device, and used to identify the second communication device as a communication device with management capability in the PIN.

In some embodiments of this application, optionally, the sending, by the third communication device, a second response message to the second communication device based on the device information of the first communication device includes:

Step 321: The third communication device sends a fifth request message to a fourth communication device, where the fifth request message is used to query a trusted member of the second communication device, and the fifth request message includes the third identifier of the second communication device in the PIN.

In this embodiment of this application, optionally, the fourth communication device can be a unified data management (Unified Data Management, UDM) entity or a unified data repository (Unified Data Repository, UDR).

The third communication device sends the fifth request message to the fourth communication device to authenticate the second communication device and query subscription data information (a trusted member of the second communication device) of the second communication device.

In this application, a trusted member can be determined by user subscription information of a PEMC (the second communication device). The trusted member includes itself (that is, the PEMC) and another trusted PEMC or PEGC (the first communication device). Trust between any two PEMCs included in trusted members is mutual. Examples of trusted members are multiple phones of a user for wearable cases, family members for smart home cases, and partner members for smart office cases.

Optionally, the fourth communication device stores a list of trusted members of the second communication device, and the third communication device queries the list of trusted members of the second communication device through the third identifier of the second communication device.

Step 322: The third communication device receives a fifth response message sent by the fourth communication device, where the fifth response message includes: the trusted member of the second communication device, or a verification result of whether the first communication device is a trusted member of the second communication device.

The fifth response message is a response to the fifth request message.

In this embodiment of this application, optionally, the sending, by the third communication device, a fourth response message to the second communication device based on the device information of the first communication device further includes: in a case that the first communication device is a trusted member of the second communication device, allocating, by the third communication device, a first identifier in the PIN to the first communication device, and sending the fourth response message to the second communication device, where the fourth response message includes the first identifier in the PIN allocated to the first communication device.

In this embodiment of this application, optionally, the sending, by the third communication device, a fourth response message to the second communication device based on the device information of the first communication device further includes: in a case that the first communication device is not a trusted member of the second communication device, sending, by the third communication device, the fourth response message to the second communication device, where the fourth response message includes the first indication information and/or the second indication information.

In this embodiment of this application, optionally, if the first information includes the first identifier in the PIN allocated to the first communication device by the third communication device, it indicates that the first communication device has been successfully registered with the PIN. In this case, the first communication device can be registered as a PINE, or as a PEGC.

In this embodiment of this application, optionally, if the first information includes the first indication information and/or the second indication information, it indicates that the first communication device has not been successfully registered with the PIN, and that the third communication device allows the first communication device to register as a PEGC in the PIN.

In this embodiment of this application, optionally, the first indication information and the second indication information can be two pieces of indication information, or one piece of indication information that indicates an association with the first communication device and indicates the first communication device to register with the third communication device.

In this embodiment of this application, optionally, the first indication information or second indication information is URI information. If the first indication information and second indication information are one piece of indication information, the indication information is URI information. The URI information is generated by the third communication device and used to provide registration authorization information (token) for the registration of the first communication device.

Below, the method for registering a PIN device in this application is described by using an example with reference to specific application scenarios.

### Embodiment 1 of this application

In this embodiment of this application, after a PEMC establishes a direct connection to a PINE/PEGC (PINE or PEGC) and obtains device information, the PEMC acts as an agent to register the PINE/PEGC with the PINMF. Referring to FIG. 4, the method for registering a PIN device in this embodiment of this application includes:

Step 41. The PINE/PEGC establishes the direct connection to the PEMC.

For example, the direct connection can be a PC5 (communication interface between terminals) direct connection, a sidelink (Sidelink) direct connection, a WiFi connection, a wireless local area network (Wireless Local Area Network, WLAN) connection, a Bluetooth connection, or the like. In an embodiment, the PEMC can implement the initial discovery of the PINE/PEGC based on manual input by a user or a third-party application. In an embodiment, the PEMC can obtain address information of the PINE/PEGC based on manual input by a user or a third-party application. In an embodiment, a PEMC function is part of a third-party application.

Step 42. The PEMC sends a first request message (such as device information query (device information query)) to the PINE/PEGC, where the first request message is used to request device information of the PINE/PEGC.

In this embodiment of this application, optionally, the device information includes at least one of the following:
(1) address information, where the address information includes at least one of the following: MAC address, IP address, port number, fully qualified domain name (FQDN), and uniform resource locator (URL);
(2) device vendor information;
(3) device description;
(4) connection information, where the connection information includes at least one of the following: service set identifier (SSID), Bluetooth identifier (BT ID), and password; and the password includes at least one of the following: WiFi password, and Bluetooth password;
(5) service feature information, where the service feature information is used to determine related information of a DNN or S-NSSAI; and optionally, the service feature information is used to determine related information of a DNN or S-NSSAI on a PEGC relay path; and
(6) second identifier for identifying a PINE/PEGC. For example, a second identifier of the PINE/PEGC can be an identifier of the PINE/PEGC in a 5G network.

Step 43. The PINE/PEGC sends a first response message (Response) to the PEMC. The first response message includes the device information of the PINE/PEGC.

Step 44. The PEMC sends a fourth request message (Registration Request) to the PINMF, where the fourth request message is used to request one of the following: the PINE/PEGC registering with the PINMF, and the PINE/PEGC registering with a PIN. The fourth request message includes the device information of the PINE/PEGC. Additionally, the fourth request message can further include: a third identifier of the PEMC in the PIN.

Step 45. The PINMF sends a fifth request message to a UDM or UDR, where the fifth request message is used to query a trusted member of the PEMC, and the fifth request message includes the third identifier of the PEMC in the PIN.

The PINMF sends the fifth request message to the UDM or UDR is to authenticate the PEMC and query subscription data information (a trusted member of the PEMC) of the PEMC.

The PINMF receives a fifth response message sent by the UDM or UDR, where the fifth response message includes: the trusted member of the PEMC, or a verification result of whether the PINE/PEGC is a trusted member of the PEMC.

In this application, a trusted member can be determined by user subscription information of the PEMC and includes itself (that is, the PEMC) and another trusted PEMC or PEGC. Trust between any two PEMCs included in trusted members is mutual. Examples of trusted members are multiple phones of a user for wearable cases, family members for smart home cases, and partner members for smart office cases.

Step 46. If the PINE/PEGC is a trusted member of the PEMC, the PINMF allocates a first identifier in the PIN to the PINE/PEGC and sends a fourth response message to the PEMC, where the fourth response message includes the first identifier in the PIN allocated to the PINE/PEGC.

If the PINE/PEGC is not a trusted member of the PEMC, the PINMF sends a fourth response message to the PEMC, where the fourth response message includes a URI. The URI is used to indicate an association with the PINE/PEGC and indicate the PINE/PEGC to register with the PINMF. Additionally, the fourth response message can further include address information of the PINMF.

Step 47. If the fourth response message includes URI, the PEMC sends a third request message to the PINE/PEGC, where the third request message is used for one of the following: requesting the PINE/PEGC to register with the PINMF, and requesting the PINE/PEGC to register with the PIN. The third request message includes the URI.

In this embodiment of this application, the first communication device and/or second communication device can be a terminal (User Equipment, UE, also known as user device). The terminal can be a terminal side device such as a mobile phone, a tablet personal computer (Tablet Personal Computer), a laptop computer (Laptop Computer) or a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home appliance with wireless communication function, such as s refrigerator, a television set, a washing machine, or a furniture), a game console, a personal computer (personal computer, PC), a teller machine, or a self-service machine. The wearable device includes a smartwatch, a smart band, a smart headphone, smart glasses, smart jewelry (a smart bracelet, a smart wristband, a smart ring, a smart necklace, a smart anklet, a smart ankle bracelet, or the like), a smart wristband, smart clothing, or the like. It should be noted that a specific type of the terminal is not limited in the embodiments of this application.

The method for registering a PIN device provided in this embodiment of this application can be executed by an apparatus for registering a PIN device. In this embodiment of this application, an apparatus for registering a PIN device executing the method for registering a PIN device is used as an example to describe the apparatus for registering a PIN device provided in the embodiments of the application.

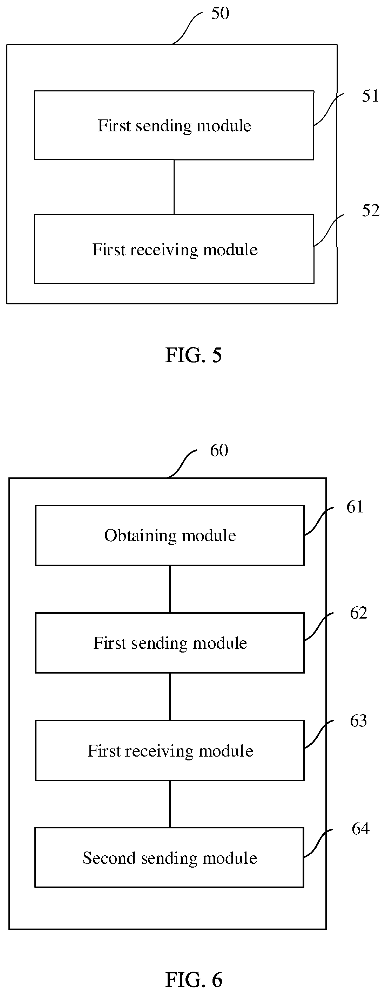

Referring to FIG. 5, an embodiment of this application provides an apparatus 50 for registering a PIN device including:
a first sending module 51 configured to send device information of a first communication device to a second communication device; and
a first receiving module 52 configured to receive first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device.

In this embodiment of this application, the process of registering the first communication device to the PIN is clarified, that is, sending the device information of the first communication device to the second communication device, so that the second communication device acts as an agent to register the first communication device with the PIN. This can reduce the implementation complexity of the first communication device. For example, in a case that the first communication device has no 3GPP communication capability, the first communication device cannot register with the network side by itself, and can be registered through agent-based registration by the second communication device. Additionally, the first communication device may not be clear about which PIN it needs to register with. The agent-based registration by the second communication device makes the affiliation of the first communication device clearer, that is, if a second communication device performs agent-based registration, the first communication device belongs to a PIN created by that second communication device.

Optionally, the first identifier is allocated by the third communication device, and used to identify at least one of the following: a communication device with gateway capability in the PIN; and a communication device in the PIN.

Optionally, the device information includes at least one of the following:
address information, where the address information includes at least one of the following: MAC address, IP address, port number, FQDN, and URL;
device vendor information;
device description;
connection information, where the connection information includes at least one of the following: SSID, BT ID, and password;
service feature information, where the service feature information is used to determine related information of a data network name DNN or S-NSSAI; and
second identifier for identifying the first communication device.

Optionally, the apparatus 50 for registering a PIN device further includes:
a second receiving module configured to receive a first request message sent by the second communication device, where the first request message is used to request the device information of the first communication device.

The first sending module 51 is configured to send a first response message to the second communication device, where the first response message includes the device information of the first communication device.

Optionally, the first sending module 51 is configured to send a second request message to the second communication device, where the second request message includes the device information of the first communication device.

Optionally, the first indication information or the second indication information is URI information.

Optionally, the first information includes the first indication information and/or the second indication information, and the apparatus 50 for registering a PIN device further includes:
a second sending module configured to send a third request message to the third communication device based on the first information, where the third request message is used to request at least one of the following: registering the first communication device with the PIN; and registering the first communication device with the third communication device.

The apparatus for registering a PIN device in this embodiment of this application can be an electronic device, such as an electronic device with an operating system, or a component in an electronic device, such as an integrated circuit or chip. The electronic device can be a terminal or another device other than the terminal. For example, the terminal can include but is not limited to the types of terminals listed above, and may be other devices such as servers or network attached storages (Network Attached Storage, NAS). This is not specifically limited in the embodiments of the application.

The apparatus for registering a PIN device provided in this embodiment of this application can implement the processes of the method embodiment in FIG. 1, with the same technical effects achieved. To avoid repetition, details are not described herein again.

Referring to FIG. 6, an embodiment of this application further provides an apparatus 60 for registering a PIN device including:
an obtaining module 61 configured to obtain device information of a first communication device;
a first sending module 62 configured to send a fourth request message to a third communication device, where the fourth request message includes the device information of the first communication device;
a first receiving module 63 configured to receive a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and
a second sending module 64 configured to send the first information to the first communication device.

In this embodiment of this application, it has specified the process of the second communication device acting as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device.

Optionally, the fourth request message further includes a third identifier of the second communication device in the PIN.

Optionally, the third identifier of the second communication device in the PIN is allocated by the third communication device and used to identify the second communication device as a communication device with management capability in the PIN.

Optionally, the first identifier is allocated by the third communication device and used to identify at least one of the following: a communication device with gateway capability in the PIN; and a communication device in the PIN.

Optionally, the device information includes at least one of the following:
address information, where the address information includes at least one of the following: MAC address, IP address, port number, FQDN, and URL;
device vendor information;
device description;
connection information, where the connection information includes at least one of the following: SSID, BT ID, and password;
service feature information, where the service feature information is used to determine related information of a DNN or S-NSSAI; and
second identifier for identifying the first communication device.

Optionally, the obtaining module 61 is configured to send a first request message to the first communication device, where the first request message is used to request the device information of the first communication device; and receive a first response message sent by the first communication device, where the first response message includes the device information of the first communication device.

Optionally, the obtaining module 61 is configured to receive a second request message sent by the first communication device, where the second request message includes the device information of the first communication device.

Optionally, the first indication information or the second indication information is registration URI information.

The apparatus for registering a PIN device in this embodiment of this application can be an electronic device, such as an electronic device with an operating system, or a component in an electronic device, such as an integrated circuit or chip. The electronic device can be a terminal or another device other than the terminal. For example, the terminal can include but is not limited to the types of terminals listed above, and may be other devices such as servers or network attached storages (Network Attached Storage, NAS). This is not specifically limited in the embodiments of the application.

The apparatus for registering a PIN device provided in this embodiment of this application can implement the processes of the method embodiment in FIG. 2, with the same technical effects achieved. To avoid repetition, details are not described herein again.

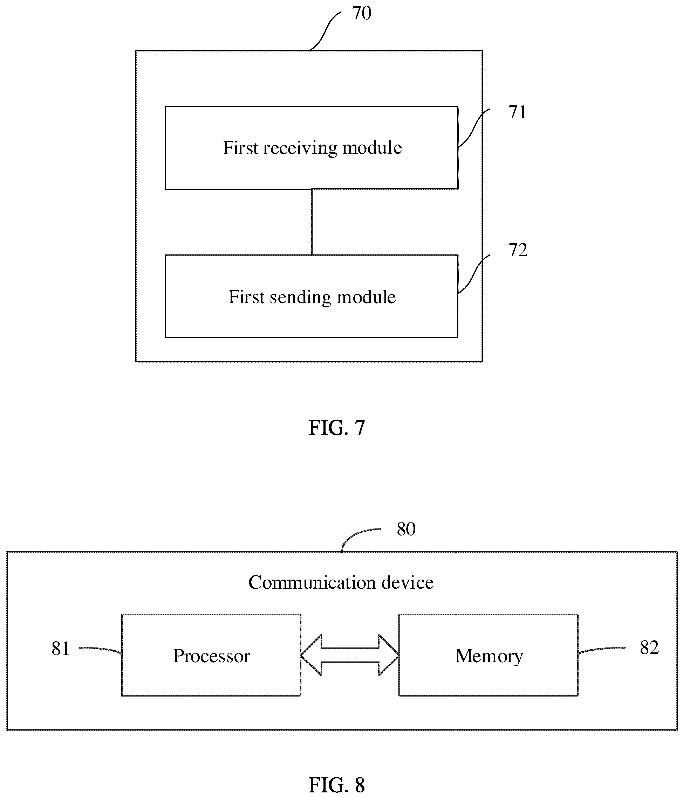

Referring to FIG. 7, an embodiment of this application provides an apparatus 70 for registering a PIN device including:
a first receiving module 71 configured to receive a fourth request message sent by a second communication device, where the fourth request message includes device information of a first communication device; and
a first sending module 72 configured to send a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with a third communication device; identifier information of the PIN; and address information of the third communication device.

In this embodiment of this application, the process of registering the first communication device to the PIN is clarified, that is, sending the device information of the first communication device to the second communication device, so that the second communication device acts as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device.

Optionally, the fourth request message further includes a third identifier of the second communication device in the PIN.

Optionally, the third identifier of the second communication device in the PIN is allocated by the third communication device, and used to identify the second communication device as a communication device with management capability in the PIN.

Optionally, the apparatus 70 for registering a PIN device further includes:
a second sending module configured to send a fifth request message to a fourth communication device, where the fifth request message is used to query a trusted member of the second communication device, and the fifth request message includes the third identifier of the second communication device in the PIN; and
a second receiving module configured to receive a fifth response message sent by the fourth communication device, where the fifth response message includes: the trusted member of the second communication device, or a verification result of whether the first communication device is a trusted member of the second communication device.

Optionally, the first sending module 72 is configured to: in a case that the first communication device is a trusted member of the second communication device, allocate a first identifier in the PIN to the first communication device, and send the fourth response message to the second communication device, where the fourth response message includes the first identifier in the PIN allocated to the first communication device.

Optionally, the first sending module 72 is configured to: in a case that the first communication device is not a trusted member of the second communication device, send the fourth response message to the second communication device, where the fourth response message includes the first indication information and/or the second indication information.

Optionally, the device information includes at least one of the following:
address information, where the address information includes at least one of the following: MAC address, IP address, port number, FQDN, and URL;
device vendor information;
device description;
connection information, where the connection information includes at least one of the following: SSID, BT ID, and password;
service feature information, where the service feature information is used to determine related information of a DNN or S-NSSAI; and
second identifier for identifying the first communication device.

Optionally, the first indication information or the second indication information is registration URI information.

The apparatus for registering a PIN device in this embodiment of this application can be an electronic device, such as an electronic device with an operating system, or a component in an electronic device, such as an integrated circuit or chip. The electronic device can be a terminal or another device other than the terminal. For example, the terminal can include but is not limited to the types of terminals listed above, and may be other devices such as servers or network attached storages (Network Attached Storage, NAS). This is not specifically limited in the embodiments of the application.

The apparatus for registering a PIN device provided in this embodiment of this application can implement the processes of the method embodiment in FIG. 3, with the same technical effects achieved. To avoid repetition, details are not described herein again.

Optionally, as shown in FIG. 8, an embodiment of this application further provides a communication device 80 including a processor 81 and a memory 82. The memory 82 stores a program or an instruction capable of running on the processor 81. For example, in a case that the communication device 80 is a terminal, the program or instruction is executed by the processor 81 to implement the steps of the embodiments of the method for registering a PIN device executed by the first communication device or second communication device, with the same technical effects achieved. In a case that the communication device 80 is a network-side device, the program or instruction is executed by the processor 81 to implement the steps of the embodiments of the method for registering a PIN device executed by the third communication device, with the same technical effects achieved. To avoid repetition, details are not described herein again.

An embodiment of this application further provides a communication device including a processor and a communication interface. The communication interface is configured to send device information of a first communication device to a second communication device; and receive first information sent by the second communication device, where the first information includes at least one of the following: a first identifier of the first communication device in a PIN; first indication information for indicating an association with the first communication device; second indication information for indicating the first communication device to register with a third communication device; identifier information of the PIN; and address information of the third communication device. This communication device embodiment corresponds to the method embodiment executed by the first communication device described above. The implementation processes and implementation manners of the above method embodiment are applicable to this communication device embodiment, with the same technical effects achieved.

An embodiment of this application further provides a communication device including a processor and a communication interface. The communication interface is configured to obtain device information of a first communication device; send a fourth request message to a third communication device, where the fourth request message includes: the device information of the first communication device; receive a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and send the first information to the first communication device. This communication device embodiment corresponds to the method embodiment executed by the second communication device described above. The implementation processes and implementation manners of the above method embodiment are applicable to this communication device embodiment, with the same technical effects achieved.

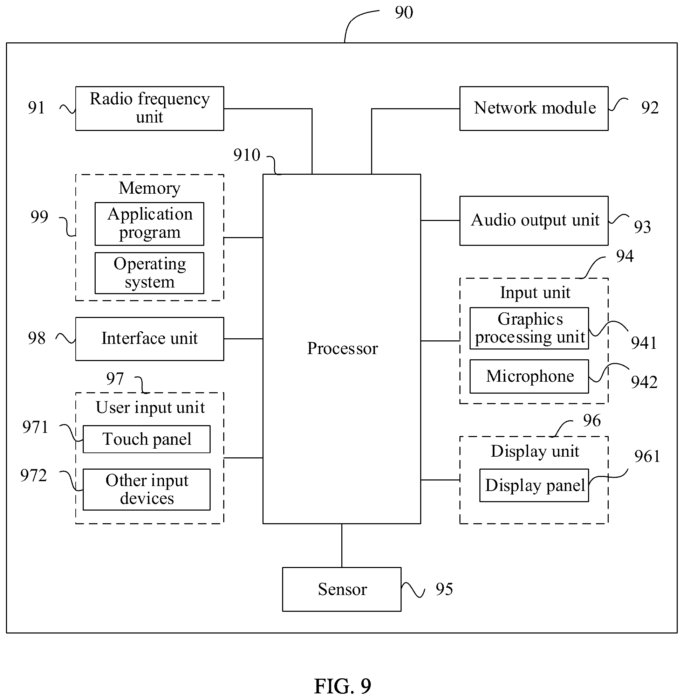

Specifically, FIG. 9 is a schematic diagram of a hardware structure of a terminal implementing an embodiment of this application.

The terminal 90 includes but is not limited to at least some components such as a radio frequency unit 91, a network module 92, an audio output unit 93, an input unit 94, a sensor 95, a display unit 96, a user input unit 97, an interface unit 98, a memory 99, and a processor 910.

Persons skilled in the art can understand that the terminal 90 may further include a power supply (for example, battery) for supplying power to the components. The power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or combine some of the components, or arrange the components differently. Details are not described herein.

It can be understood that in this embodiment of this application, the input unit 94 may include a graphics processing unit (Graphics Processing Unit, GPU) 941 and a microphone 942. The graphics processing unit 941 processes image data of a still picture or video obtained by an image capture apparatus (such as a camera) in a video capture mode or an image capture mode. The display unit 96 may include a display panel 961, and the display panel 961 may be configured in a form of a liquid crystal display, an organic light-emitting diode, and the like. The user input unit 97 includes at least one of a touch panel 971 and other input devices 972. The touch panel 971 is also referred to as a touchscreen. The touch panel 971 may include two parts: a touch detection apparatus and a touch controller. The other input devices 972 may include but are not limited to a physical keyboard, a function button (for example, a volume control button or a power on/off button), a trackball, a mouse, and a joystick. Details are not described herein.

In this embodiment of this application, after receiving downlink data from a network-side device, the radio frequency unit 91 can transmit it to the processor 910 for processing. Additionally, the radio frequency unit 91 can send uplink data to the network-side device. Generally, the radio frequency unit 91 includes but is not limited to an antenna, an amplifier, a transceiver, a coupler, a low noise amplifier, and a duplexer.

The memory 99 may be configured to store a software program or an instruction and various data. The memory 99 can mainly include a first storage area for storing a program or an instruction and a second storage area for storing data. The first storage area can store an operating system, an application program or instruction required by at least one function (for example, a sound play function or an image play function), and the like. In addition, the memory 99 may include a volatile memory or a non-volatile memory, or the memory 99 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct Rambus random access memory (Direct Rambus RAM, DRRAM). The memory 99 in this embodiment of this application includes but is not limited to these and any other suitable types of memories.

The processor 910 may include one or more processing units. Optionally, the processor 910 may integrate an application processor and a modem processor. The application processor mainly processes operations related to an operating system, a user interface, an application program and the like. The modem processor mainly processes a wireless communication signal, for example, a baseband processor. It can be understood that the modem processor can alternatively be not integrated in the processor 910.

In some embodiments, the radio frequency unit 91 is configured to send device information of a first communication device to a second communication device; and receive first information sent by the second communication device. The first information includes at least one of the following: a first identifier of the first communication device in a PIN; first indication information for indicating an association with the first communication device; second indication information for indicating the first communication device to register with a third communication device; identifier information of the PIN; and address information of the third communication device.

In this embodiment of this application, the process of registering the first communication device to the PIN is clarified, that is, sending the device information of the first communication device to the second communication device, so that the second communication device acts as an agent to register the first communication device with the PIN. This can reduce the implementation complexity of the first communication device. For example, in a case that the first communication device has no 3GPP communication capability, the first communication device cannot register with the network side by itself, and can be registered through agent-based registration by the second communication device. Additionally, the first communication device may not be clear about which PIN it needs to register with. The agent-based registration by the second communication device makes the affiliation of the first communication device clearer, that is, if a second communication device performs agent-based registration, the first communication device belongs to a PIN created by that second communication device.

Optionally, the first identifier is allocated by the third communication device, and used to identify at least one of the following: a communication device with gateway capability in the PIN; and a communication device in the PIN.

Optionally, the device information includes at least one of the following:
address information, where the address information includes at least one of the following: MAC address, IP address, port number, FQDN, and URL;
device vendor information;
device description;
connection information, where the connection information includes at least one of the following: SSID, BT ID, and password;
service feature information, where the service feature information is used to determine related information of a data network name DNN or S-NSSAI; and
second identifier for identifying the first communication device.

Optionally, the radio frequency unit 91 is configured to receive a first request message sent by the second communication device, where the first request message is used to request the device information of the first communication device; and send a first response message to the second communication device, where the first response message includes the device information of the first communication device.

Optionally, the radio frequency unit 91 is configured to send a second request message to the second communication device, where the second request message includes the device information of the first communication device.

Optionally, the first indication information or the second indication information is URI information.

Optionally, the first information includes the first indication information and/or the second indication information. The radio frequency unit 91 is configured to send a third request message to the third communication device based on the first information, where the third request message is used to request at least one of the following: registering the first communication device with the PIN; and registering the first communication device with the third communication device.

In some embodiments, the radio frequency unit 91 is configured to obtain device information of a first communication device; send a fourth request message to a third communication device, where the fourth request message includes the device information of the first communication device; receive a fourth response message sent by the third communication device, where the fourth response message includes first information, and the first information includes at least one of the following: a first identifier of the first communication device in a PIN; first indication information for indicating an association with the first communication device; second indication information for indicating the first communication device to register with the third communication device; identifier information of the PIN; and address information of the third communication device; and send the first information to the first communication device.

In this embodiment of this application, it has specified the process of the second communication device acting as an agent to register the first communication device with the PIN. This can reduce the implementation complexity of the first communication device. Additionally, the agent-based registration by the second communication device makes the affiliation of the first communication device clearer, that is, if a second communication device performs agent-based registration, the first communication device belongs to a PIN created by that second communication device.

Optionally, the fourth request message further includes a third identifier of the second communication device in the PIN.

Optionally, the third identifier of the second communication device in the PIN is allocated by the third communication device, and used to identify the second communication device as a communication device with management capability in the PIN.

Optionally, the first identifier is allocated by the third communication device, and used to identify at least one of the following: a communication device with gateway capability in the PIN; and a communication device in the PIN.

Optionally, the device information includes at least one of the following:
address information, where the address information includes at least one of the following: MAC address, IP address, port number, FQDN, and URL;
device vendor information;
device description;
connection information, where the connection information includes at least one of the following: SSID, BT ID, and password;
service feature information, where the service feature information is used to determine related information of a DNN or S-NSSAI; and
second identifier for identifying the first communication device.

Optionally, the radio frequency unit 91 is configured to send a first request message to the first communication device, where the first request message is used to request the device information of the first communication device; and receive a first response message sent by the first communication device, where the first response message includes the device information of the first communication device.

Optionally, the radio frequency unit 91 is configured to receive a second request message sent by the first communication device, where the second request message includes the device information of the first communication device.

Optionally, the first indication information or the second indication information is registration URI information.

An embodiment of this application further provides a communication device including a processor and a communication interface. The communication interface is configured to receive a fourth request message sent by a second communication device, where the fourth request message includes device information of a first communication device; and send a fourth response message to the second communication device based on the device information of the first communication device, where the fourth response message includes first information, and the first information includes at least one of the following: a first identifier of the first communication device in a PIN; first indication information for indicating an association with the first communication device; second indication information for indicating the first communication device to register with a third communication device; identifier information of the PIN; and address information of the third communication device. This communication device embodiment corresponds to the method embodiment executed by the third communication device described above. The implementation processes and implementation manners of the above method embodiments are applicable to this communication device embodiment, with the same technical effects achieved.

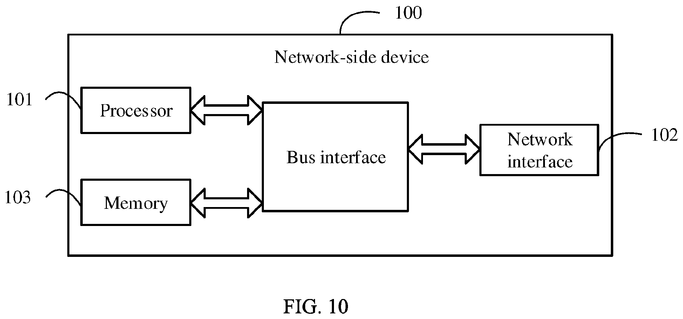

Specifically, an embodiment of this application further provides a communication device. As shown in FIG. 10, the communication device 100 includes a processor 101, a network interface 102, and a memory 103. The network interface 102 is, for example, a common public radio interface (common public radio interface, CPRI).

Specifically, the communication device 100 in this embodiment of this application further includes an instruction or a program stored in the memory 103 and capable of running on the processor 101. The processor 101 invokes the instruction or program in the memory 103 to perform the method performed by the modules shown in FIG. 7, with the same technical effects achieved. To avoid repetition, details are not described herein.

An embodiment of this application further provides a readable storage medium. The readable storage medium stores a program or an instruction. When the program or instruction is executed by a processor, the processes of the foregoing embodiment of the method for registering a PIN device are implemented, with the same technical effects achieved. To avoid repetition, details are not described herein again.

The processor is the processor in the terminal in the foregoing embodiments. The readable storage medium can be non-volatile, or can be non-transitory. The readable storage medium may include a computer-readable storage medium such as a computer read-only memory (ROM), a random access memory (RAM), a magnetic disk, or an optical disc.

Another embodiment of this application further provides a chip. The chip includes a processor and a communication interface, the communication interface is coupled to the processor, and the processor is configured to run a program or an instruction to implement the processes of the foregoing embodiments of the method for registering a PIN device, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiments of the method for registering a PIN device, with the same technical effects achieved. To avoid repetition, details are not described herein again.

An embodiment of this application further provides a communication system including a first communication device, a second communication device, and a third communication device. The first communication device can be configured to execute the steps of the method for registering a PIN device executed by the first communication device, the second communication device can be configured to execute the steps of the method for registering a PIN device executed by the second communication device, and the third communication device can be configured to execute the steps of the method for registering a PIN device executed by the third communication device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the embodiments, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the related art may be implemented in a form of a computer software product. The computer software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for registering a personal IoT network PIN device, comprising:
sending, by a first communication device, device information of the first communication device to a second communication device; and
receiving, by the first communication device, first information sent by the second communication device, wherein the first information comprises at least one of the following: a first identifier of the first communication device in a PIN; first indication information for indicating an association with the first communication device; second indication information for indicating the first communication device to register with a third communication device; identifier information of the PIN; and address information of the third communication device.

2. The method according to claim 1, wherein the first identifier is allocated by the third communication device, and used to identify at least one of the following: a communication device with gateway capability in the PIN; and a communication device in the PIN.

3. The method according to claim 1, wherein the device information comprises at least one of the following:
address information, wherein the address information comprises at least one of the following: media access control MAC address, internet protocol IP address, port number, fully qualified domain name FQDN, and uniform resource locator URL;
device vendor information;
device description;
connection information, wherein the connection information comprises at least one of the following: service set identifier SSID, Bluetooth identifier BT ID, and password;
service feature information, wherein the service feature information is used to determine related information of a data network name DNN or single network slice selection assistance information S-NSSAI; and
second identifier for identifying the first communication device.

4. The method according to claim 1, wherein the sending, by a first communication device, device information of the first communication device to a second communication device comprises:
receiving, by the first communication device, a first request message sent by the second communication device, wherein the first request message is used to request the device information of the first communication device; and sending, by the first communication device, a first response message to the second communication device, wherein the first response message comprises the device information of the first communication device;
or
sending, by the first communication device, a second request message to the second communication device, wherein the second request message comprises the device information of the first communication device.

5. The method according to claim 1, wherein the first indication information or the second indication information is registration uniform resource identifier URI information.

6. The method according to claim 1, wherein the first information comprises the first indication information and/or the second indication information, and the method further comprises:
sending, by the first communication device, a third request message to the third communication device based on the first information, wherein the third request message is used to request at least one of the following: registering the first communication device with the PIN; and registering the first communication device with the third communication device.

7. A method for registering a PIN device, comprising:
obtaining, by a second communication device, device information of a first communication device;
sending, by the second communication device, a fourth request message to a third communication device, wherein the fourth request message comprises the device information of the first communication device;
receiving, by the second communication device, a fourth response message sent by the third communication device, wherein the fourth response message comprises first information, and the first information comprises at least one of the following: a first identifier of the first communication device in a PIN; first indication information for indicating an association with the first communication device; second indication information for indicating the first communication device to register with the third communication device; identifier information of the PIN; and address information of the third communication device; and
sending, by the second communication device, the first information to the first communication device.

8. The method according to claim 7, wherein the fourth request message further comprises a third identifier of the second communication device in the PIN.

9. The method according to claim 8, wherein the third identifier of the second communication device in the PIN is allocated by the third communication device, and used to identify the second communication device as a communication device with management capability in the PIN.

10. The method according to claim 7, wherein the first identifier is allocated by the third communication device, and used to identify at least one of the following: a communication device with gateway capability in the PIN; and a communication device in the PIN.

11. The method according to claim 7, wherein the device information comprises at least one of the following:
address information, wherein the address information comprises at least one of the following: MAC address, IP address, port number, FQDN, and URL;
device vendor information;
device description;
connection information, wherein the connection information comprises at least one of the following: SSID, BT ID, and password;
service feature information, wherein the service feature information is used to determine related information of a DNN or S-NSSAI; and
second identifier for identifying the first communication device.

12. The method according to claim 7, wherein the obtaining, by a second communication device, device information of a first communication device comprises:
sending, by the second communication device, a first request message to the first communication device, wherein the first request message is used to request the device information of the first communication device; and receiving, by the second communication device, a first response message sent by the first communication device, wherein the first response message comprises the device information of the first communication device;
or
receiving, by the second communication device, a second request message sent by the first communication device, wherein the second request message comprises the device information of the first communication device.

13. The method according to claim 7, wherein the first indication information or the second indication information is registration URI information.

14. A method for registering a PIN device, comprising:
receiving, by a third communication device, a fourth request message sent by a second communication device, wherein the fourth request message comprises device information of a first communication device; and
sending, by the third communication device, a fourth response message to the second communication device based on the device information of the first communication device, wherein the fourth response message comprises first information, and the first information comprises at least one of the following: a first identifier of the first communication device in a PIN; first indication information for indicating an association with the first communication device; second indication information for indicating the first communication device to register with the third communication device; identifier information of the PIN; and address information of the third communication device.

15. The method according to claim 14, wherein the fourth request message further comprises a third identifier of the second communication device in the PIN.

16. The method according to claim 15, wherein the third identifier of the second communication device in the PIN is allocated by the third communication device, and used to identify the second communication device as a communication device with management capability in the PIN.

17. The method according to claim 15, wherein the sending, by the third communication device, a second response message to the second communication device based on the device information of the first communication device comprises:
sending, by the third communication device, a fifth request message to a fourth communication device, wherein the fifth request message is used to query a trusted member of the second communication device, and the fifth request message comprises the third identifier of the second communication device in the PIN; and
receiving, by the third communication device, a fifth response message sent by the fourth communication device, wherein the fifth response message comprises: the trusted member of the second communication device, or a verification result of whether the first communication device is a trusted member of the second communication device.

18. The method according to claim 17, wherein the sending, by the third communication device, a fourth response message to the second communication device based on the device information of the first communication device further comprises:
in a case that the first communication device is a trusted member of the second communication device, allocating, by the third communication device, the first identifier in the PIN to the first communication device, and sending the fourth response message to the second communication device, wherein the fourth response message comprises the first identifier in the PIN allocated to the first communication device.

19. The method according to claim 17, wherein the sending, by the third communication device, a fourth response message to the second communication device based on the device information of the first communication device further comprises:
in a case that the first communication device is not a trusted member of the second communication device, sending, by the third communication device, the fourth response message to the second communication device, wherein the fourth response message comprises the first indication information and/or the second indication information.

20. The method according to claim 14, wherein the device information comprises at least one of the following:
address information, wherein the address information comprises at least one of the following: MAC address, IP address, port number, FQDN, and URL;
device vendor information;
device description;
connection information, wherein the connection information comprises at least one of the following: SSID, BT ID, and password;
service feature information, wherein the service feature information is used to determine related information of a DNN or S-NSSAI; and
second identifier for identifying the first communication device.

21. The method according to claim 14 or 19, wherein the first indication information or the second indication information is registration URI information.

22. An apparatus for registering a PIN device, comprising:
a first sending module configured to send device information of a first communication device to a second communication device; and
a first receiving module configured to receive first information sent by the second communication device, wherein the first information comprises at least one of the following: a first identifier of the first communication device in a PIN; first indication information for indicating an association with the first communication device; second indication information for indicating the first communication device to register with a third communication device; identifier information of the PIN; and address information of the third communication device.

23. An apparatus for registering a PIN device, comprising:
an obtaining module configured to obtain device information of a first communication device;
a first sending module configured to send a fourth request message to a third communication device, wherein the fourth request message comprises the device information of the first communication device;
a first receiving module configured to receive a fourth response message sent by the third communication device, wherein the fourth response message comprises first information, and the first information comprises at least one of the following: a first identifier of the first communication device in a PIN; first indication information for indicating an association with the first communication device; second indication information for indicating the first communication device to register with the third communication device; identifier information of the PIN; and address information of the third communication device; and
a second sending module configured to send the first information to the first communication device.

24. An apparatus for registering a PIN device, comprising:
a first receiving module configured to receive a fourth request message sent by a second communication device, wherein the fourth request message comprises device information of a first communication device; and
a first sending module configured to send a fourth response message to the second communication device based on the device information of the first communication device, wherein the fourth response message comprises first information, and the first information comprises at least one of the following: a first identifier of the first communication device in a PIN; first indication information for indicating an association with the first communication device; second indication information for indicating the first communication device to register with a third communication device; identifier information of the PIN; and address information of the third communication device.

25. A network-side device comprising a processor and a memory, wherein the memory stores a program or an instruction capable of running on the processor, and when the program or instruction is executed by the processor, the steps of the method for registering a PIN device according to any one of claims 1 to 6 are implemented, when the program or instruction is executed by the processor, the steps of the method for registering a PIN device according to any one of claims 7 to 13 are implemented, or when the program or instruction is executed by the processor, the steps of the method for registering a PIN device according to any one of claims 14 to 21 are implemented.

26. A readable storage medium, wherein the readable storage medium stores a program or an instruction, and when the program or instruction is executed by a processor, the steps of the method for registering a PIN device according to any one of claims 1 to 6 are implemented, the steps of the method for registering a PIN device according to any one of claims 7 to 13 are implemented, or the steps of the method for registering a PIN device according to any one of claims 14 to 21 are implemented.
